# EUROPEAN PATENT SPECIFICATION

(11) **EP 1 960 472 B1**
(45) Date of publication and mention of the grant of the patent: **18.11.2009**
(21) Application number: 06831514.2
(22) Date of filing: 15.12.2006
(51) Int. Cl.: C08L 95/00

(54) **CHEMICALLY STABILIZED ASPHALT RUBBER COMPOSITIONS AND A MECHANOCHEMICAL METHOD FOR PREPARING THE SAME**
CHEMISCH STABILISIERTE ASPHALTKAUTSCHUKZUSAMMENSETZUNGEN UND MECHANISCH-CHEMISCHES HERSTELLUNGSVERFAHREN DAFÜR
COMPOSITIONS DE BITUME-CAOUTCHOUC CHIMIQUEMENT STABILISEES ET PROCEDE MECANOCHIMIQUE POUR L'ELABORATION DESDITES COMPOSITIONS

(30) Priority: 16.12.2005 HU 0501159
(43) Date of publication of application: 27.08.2008
(73) Proprietor: MOL Magyar Olaj-és Gázipari Nyilvánosan Múködõ Részvénytársaság, 1117 Budapest (HU)
(72) Inventor: BIRO, Szabolcs, H-5700 Gyula (HU); BARTHA, László, H-8200 Veszprém (HU); DEAK, Gyula, N-4400 Nyiregyháza (HU); GEIGER, András, H-8900 Zalaegerszeg (HU)
(74) Representative: Derzsi, Katalin
(86) International application number: PCT/HU2006/000114
(87) International publication number: WO 2007/068990

(56) References cited:
- EP-A- 1 357 155
- EP-A1- 0 758 016
- US-A1- 4 992 492

## Description

### TECHNICAL FIELD

The subject of the present invention is a chemically stabilized asphalt rubber composition (CSAR), which could be used as bituminous binder for different applications. CSAR consists of asphalt, crumb rubber from scrap tyres, and an additive package composed of dispersant and active stabilising agents and other additives. Another subject of the invention is a mechanochemical method for preparing the said compositions.

### BACKGROUND OF THE INVENTION

Bituminous binders which are widely used for road constructions and by the roofing industry are vacuum distilled products of different crude oils modified with different materials, mostly organic polymers. This is a needful step because distilled asphalts, which consist of resins, oily fractions and dispersed hydrocarbon based polycyclic compounds (asphaltenes), do not satisfy the new quality requirements without modification. These new requirements usually mean the improvement of elasticity, cohesion, cold and heat resistance and aging characteristics of virgin asphalts. Currently oxidation and/or different additives are widely used for improving binder properties. The most commonly used additives are elastomers like styrene-butadiene (SBR), styrene-butadiene-styrene (SBS), etylene-vinyl-acetate (EVA) copolymers, and for improving mechanical properties different plastomers (polyolefins) are mixed into asphalts. Crumb rubbers from scrap tyres are also used to produce better binders. To improve other properties such like cohesion, viscosity-temperature susceptibility, oxidative stability other well known additives could be applied.

By using common synthetic elastomers significant improvements were obtained in elasticity, stiffness, resistance against abrasion etc. of the binder and this resulted in higher quality of asphalt mixtures too. Similar effects were obtained with crumb rubber modified asphalts (CRMA), which are usually produced by the classic wet process (US 3,891,585). This technology has been spreading steadily in the construction of asphalt pavements.

Despite the many advantages of these processes they have some disadvantages as well, which affect their acceptance. Synthetic elastomers are expensive and unless they are used in low concentrations (3-10%), the cost of binders will be inhibiting. Furthermore they have limited solubility in asphalts so the compositions have high settling susceptibility. This reduces reproducibility of the process, the quality of asphalt mixtures and results in deposition in storage tanks of asphalt mixing units. The poor reproducibility of the stability of modified binders can be the result of changing of the composition, since different compositions have different solubility.

High settling of CRMAs prepared with the wet process limits their utilization too. According to usage guide of AR, CRMAs should be used within four hours after their preparation (California AR Design Guide) [Shatnawi 2003, SSP].

To overcome these disadvantages many new solutions were developed in the last couple of years. The common effort in these were to establish weak or strong chemical bonds between the functional groups of the modifying agents (polymers) and asphalt compounds.

According to US 5,830,925, US 5,939,474, and US 6,060,542 patents the stability of asphalt elastomer mixtures could be improved by blowing oxygen containing gases through these blends. A similar solution is when crumb rubber is pretreated using hydrogen peroxide and after that dispersed in virgin asphalt. Stability of these dispersions is increased by chemical bonds (polar-polar, acid-base etc, US 4,503,176) between the oxidized surface of rubber crumbs and the oxygen containing asphalt resins.

Another solution to increase the stability of elastomer modified asphalts is applying synthetic polymers with polar functional groups, which are able to establish bonds with both the asphalt and the elastomers: Ethylene-vinyl-acetate copolymers (WO 9744397, US 5,888,289), and crystalline α-olefin copolymers (US 4,419,469) are widely used for this end. Phenyl-aldehyde resins (US 5,256,710), copolymers of α-olefins and unsaturated epoxides can form three dimensional cross-links in modified asphalts as well (US 5,990,207). For increasing stability of rubberized asphalts crumb rubbers were swollen at 175-250°C in aromatic solvents, and then dispersed at concentrations of 15-50% in virgin asphalts. During this process partial devulcanization took place which affected the reactions between functional groups of asphalt and the surface of degraded rubber and fostered the building up of a crosslinking structure with an improved stability against settling (US 5,304,576). To this rubberized asphalt polyolefin type of plastomers or synthetic elastomers were added to improve their properties (WO 99/27108, US 5,719,215, US 4,992,492, US 5,936,015). Blends of high rubber content could be used for granulated compositions (WO 98/37146). A disadvantage of these processes is that highly aromatic oils, with toxic effect, are used for activating, swelling crumb rubbers. Another disadvantage is that during devulcanisation of the surface of the crumb rubbers the formed functional groups make bonds with asphalt molecules but the composition of asphalts are always changing so the reproducibility of the process will be poor.

For increasing the stability and cohesion of rubberized asphalts mixture of etylene-vinyl-acetate, silicic acid (RU 2,144,588) or in another case hydrogen peroxide treated crumb rubber and glycidyl-methacrylate copolymer (US 5,704,971) were used.

By using the above mentioned techniques some of the properties of modified and rubberized asphalts could be improved, but some of their disadvantages were impossible to be eliminated.

For example storage stability of elastomer and plastomer modified asphalts is still not appropriate. Elastomers, because of their significant double bond content are sensitive to oxidization so their resistance against aging, cold cracking is low. Plastomer modified asphalts have poor elastic properties.

Because of the strong settling tendency of asphalt rubbers produced by the classic wet process, the mostly suggested production method, it should be followed by asphalt mixing within a couple of hours. ARs have low ductility and elastic recovery. The specific cost of their application is high since special mixing equipment is recommended. Furthermore the binder concentration should be higher by 20-40% in asphalt mixtures. Because of these circumstances when applying the wet process, new modifying and mixing units, road construction and asphalt mixing technology should be used.

### DISCLOSURE OF THE INVENTION

Based on our research in this field it was realized that by changing the process parameters of asphalt modification, introducing new types of additives the disadvantages could be eliminated or significantly decreased. Other advantageous properties could also be achieved.

A further economical advantage is that chemically stabilized asphalt rubbers could be produced in an existing SBS modifying unit, no special equipment is required. The CSAR binder could be mixed with aggregates and applied in normal road construction equipments as well.

During the study of chemically stabilized asphalt rubbers which consist of crumb rubbers from scrap tyres, and different types of virgin asphalts it was found that three important conditions should be fulfilled at the same time to produce superior quality crumb rubber modified binder. These conditions are the followings:
a) Firstly, to produce CSAR according to this invention during the mechano-chemical degradation and/or dispergation and revulcianisation processes an additive package is used which consists of an alkenyl and/or polyalkenyl-succinic amide and/or imide and/or ester based multifunctional dispersant antisettling additive (Component "A") with an average molecular weight of *M̅*ₙ= 600-200000, typically 1000-100000 at a concentration of 0.03-4w/w% with high thermal and chemical stability. Component "B" reduces viscosity and has limited cross-linking capability at concentration of 0.01-4w/w%. Other antioxidant and anticorrosion additive (Component "C") can be used as well in 1-2w/w% concentration.
   The dispersant component of this additive package is component "A":
   - that disperses both carbon black and solid filling materials and consists of highly polar, proton acceptor (N, O containing) compounds,
   - its molecules contain oleophile hydrocarbon groups, which allow the dissolution of asphaltenes, resins, paraffins, furthermore 30-90% of the molecules contain olefinic groups which help forming crosslinking chemical bonds between hydrocarbon components of asphalts and crumb rubbers during the devulcanization step.
   - The molar ratio of the oleophile alkyl or polyolefin (PO) and/or polyaromatic (PAR) groups, to the polar, basic and/or ester groups (PB) in the additive is between PO(PAR)/PB = 1-3:1-6, preferably between 1-2:1-3.

   Component "B" is a flow modifier, mostly viscosity decreaser and/or cross-linking additive with average molecular weight of *M̅*ₙ= 500-100000. It consists of paraffins, olefins, or their mixtures and/or copolymers and/or their derivatives functionalized with dicarbonyl, dicarboxylic anhydride etc groups and/or if necessary other type of block copolymers, which are usually used for asphalt modification (styrene-butadiene "SBR", styrene-butadiene-styrene "SBS", acrylonitrile-butadiene-styrene "ABS" block copolymer etc).
   Component "C" is one of the amine type of antioxidant and/or anticorrosion additives, which supplements the effect of the phenyl derivatives in the asphalts.
b) Secondly, according to our invention road construction or roofing asphalts are heated to 70-230°C and blended with 3-40w/w% crumb rubber, typically 10-30w/w% (Step 1. - thermal degradation). Crumb rubber could be produced by grinding of scrap tyres and/or other types of waste elastomer rubbers or mixtures of them. Particle size should be maximum 4 mm, typically less than 2 mm. Antisettling additive and reactive additives are blended together with the asphalt and crumb rubber mixed by continuous stirring at 200-270°C for 0.5-8 hours for partial devulcanisation. During the process different chemical reactions take place (e.g. devulcanization, chain breaking and other secondary bonding reactions) on the surface of the crumb rubber. The antisettling additve at a concentration of 0.04-5w/w% affects these reactions too. This complex process results in a finely dispersed suspension, which is apt to settle.
c) Thirdly, a mechanochemically supported dispergation/revulcanisation takes place. The suspension is cooled down to 160-190°C and revulcanisation is started in the presence of the dispersant, which was added before in the first step or a newly added reactive dispersant additive that helps to form an elastic colloid system. This step is a high shear mixing for 0.5-6 hours with adding air or nitrogen at atmospheric pressure. Finally the blend is cooled down to 130-150°C and diluted with virgin asphalt to obtain the desired properties.
It was found that if all the above mentioned conditions were applied at the same time then by using a wide variety of raw materials it could be possible to produce a new type of crumb rubber modified asphalt, which unites the advantageous properties of elastomer modified asphalts and asphalt rubber prepared with the classic wet process.

Commercially available distilled-, oxidized asphalts, goudrons and their doped form could be used for production as raw materials.

Crumb rubbers as raw materials should be prepared by grinding at ambient or cryogenic temperatures, abrasion, chipping, ultra high pressure waterjet technology etc. with maximum size of 4mm, advantageously less than 2 mm. Rubber crumbs produced by grinding at ambient temperature have the most favourable effect because of their higher specific surface area. These rubbers should have low cord and metal content as well. Crumb rubbers produced at cryogenic circumstances could be used as well, but their surfaces need to be pretreated, (oxidation, water activation, solvent swelling etc) before blending. But this kind of pretreatings would increase preparation costs.

It was found, that it was beneficial to use additive packages with multifunctional dispersant antisettling additive, that contain functional groups in advantageous ratio, for example alkenyl- and/or polyalkenyl succinic amides and/or imides and/or esters, polyalkenyl polysuccinic amides, polyimides, polyesters, or their derivatives or their mixtures (0.04-5w/w%) and besides the active agent they may contain flow improver polyolefins, elastomers (0.01-2w/w%) and if necessary antioxidant, for example: dialkyl phenols, dialkyl cresols, alkyl amines, dialkyl amines, diphenyl amine derivatives and their mixtures in different ratio (0.001-0.5w/w%) furthermore amides, esters, alkanolamine esters of fatty acids from vegetables or other types of corrosion inhibitors or their mixtures (0-0.1w/w%).

It was recognized during comparison of production parameters that the efficiency of mechanochemical dispergation and thermal degradation can be impoved, if the concentration of crumb rubber during thermal devulcanization was higher than that in the end product by 10-100% and the final properties can be adjusted during the last third of mechanochemical dispergation with addition of asphalt.

Asphalt rubbers produced according to our invention showed better properties than virgin asphalt due to this new type of cross-linked structure.

CSARs produced according to this invention have higher resistance against aging, shear stresses and better cold properties than elastomer (mostly SBS) modified asphalts. They have better elasticity than plastomer modified asphalts as well. Compared to ARs produced with the wet process CSARs have better storage stability, improved elasticity, increased cohesion to aggregates, and lower viscosity, which does not reach the upper limit of the standard requirements. During CSAR production there is no need for aromatic, toxic solvents so emission of both the process and utilization could be decreased.

Several formulas were developed to produce CSARs, which are appropriate for road construction applications and roofing purposes etc. By applying these formulas a wide variety of properties could be achieved.

An important feature of this invention is the multifunctional additive package. Component "A", which is the dispersant, antisettling component could be produced by the followings:
Additives with dispersant and antisettling effieciencies (D1 - D4) were prepared by the method described in patents HU 197.936, HU 206.390, HU 211.439 originally developed for additives in engine oils for synthesizing alkenyl-succinic anhydride and polyalkenyl-polysuccinic anhydride based dispersants. The present invention related to the preparation of an additive type, where in a stirred reaction vessel 100g of polyolefin or other organic compound with unsaturated double bonds, preferably C₂-C₅₀ α-olefines, styrene and/or their homo-/or copolymers and/or unsaturated carboxylic ester derivatives with number average molecular weight of *M̅*ₙ= 500-15000 is mixed and reacted with maleic anhydride using the molar ratio 1:1-1:4 in the presence or absence of a radical initiator at 120-220°C, for 2-10 hours, after that the unreacted maleic-anhydride is removed by boiling under vacuum. This intermediate product is reacted with polyethylene-polyamines, alkanolamines, aromatic alcohols, polyalcohols or with their mixtures at 160°C, using the molar ratio 3:1-1:1, cooled to ambient temperature and if necessary filtered by using filter aids.

Component "B" (FM-1,2,3,4,5) is a flow improver preferably a commercially available polyisobutylene, polypropylene, copolymer of C₂-C₄ α-olefins, their mixtures and/or degradate of waste polymers. The degradation of waste polymers is carried out in a stirred glass vessel, where 500g of waste polyethylenes (LDPE, HDPE), polypropylene (PP) polystyrene (PS) or copolymers from their monomers or their mixture is heated to degradation temperature (380-500°C). The volatile components (boiling point less than 350°C) are boiled off. The residue, which had 40-80% olefin content is purified and filtered if necessary and that is Component "B".

Component "C" could be produced by using vegetable oils or polyolefin residues which are mixed with maleic anhydride at the molar ratio of 1:1 carrying out a thermal initiated reaction, where the adduct is an anticorrosion additive (AC) or commercially available antioxidant or the derivatives of these adducts obtained by reaction with alkanolamines, alkylamines, phenylamines, diphenylamines etc at 120-180°C and/or other amine type antioxidant additive (AO-1,2).

Advantages of CSAR prepared according to the present invention are illustrated by the following examples.

### DESCRIPTION OF THE PREFERRED EMBODIMENTS

### Example 1.

### General preparation process of CSAR according to present invention

B50/70 and/or B160/220 or other commercially available virgin asphalt or their mixture in a predetermined ratio, 0.03-4w/w% polyalkenyl- succinic ester-amide type dispersant, with an average molecular weight of *M̅*ₙ= 500-15000, flow improver additive at 0.01-4w/w% concentration, with an average molecular weight of *M̅*ₙ= 500-100000 and if necessary 0-2w/w% amine type of antioxidant and/or anticorrosion additive are heated to 70-230°C, then 3-40w/w% of crumb rubber, (0.1-4mm) is added in one or more portions to the previous mixture. This blend is heated at 190-270°C for 0.5-8 hours when chemical degradation takes place, then it is cooled down to 160-190°C and high shear mixing is applied for 0.25-4 hours. If necessary the blend is diluted with virgin asphalt to get a final rubber concentration between 2-30w/w%. The diluted blend is homogenized for another 0.25-2 hours with high shear mixer. The final product should be cooled down to 130°C before storage.

### Example 2.

### (Reference) Asphalt rubber (AR-1 and AR-2) production with the wet process

This classic asphalt rubber is produced by Californian method (California AR Design Guide), where a B160/220 virgin asphalt is applied. During the process neither stabilizing agent, nor asphalt dilution is employed. The preparation of these products is carried out by use of reaction parameters given in Table 1. The product is cooled down to 130°C and stored in tanks.

### Example 3.

### (Reference) Production of SBS modified asphalt (PmB-A-1).

Predetermined amount of B160/220 virgin asphalt is pumped to a batch reactor and heated to 185°C. 8w/w% of commercially available linear SBS is added and mixed with middle RPM for 100 minutes. The mixture is diluted with fresh B 160/220 asphalt to get a final SBS content of 2-6w/w%. The diluted blend should be homogenized for another 10 minutes and cooled down to 130°C before storage.
Table 1 illustrates the advantages of CSAR compared to reference samples prepared according to methods in Examples 2-3.

**Table 1. The composition and properties of the asphalt rubber samples prepared by the reference methods and by this invention**

| **Examples** | | **AR-1** | **AR-2** | **PmB-A-1** | **CSAR-1** | **CSAR-2** | **CSAR-3** |
|---|---|---|---|---|---|---|---|
| **Method of preparation** | | **Reference** **example 2** | **Reference** **example 2** | **Reference** **example 3** | **Example** **1** | **Example** **1** | **Example** **1** |
| **Content, mass%** | | | | | | | |
| B50/70 virgin asphalt¹ | | - | - | - | 25.0 | 42.4 | 59.8 |
| B160/220 virgin asphalt² | | 80 | 85 | 96 | 59.8 | 42.4 | 25.0 |
| G1 crumb rubber³ | | 20 | 15 | - | 15.0 | 15.0 | 15.0 |
| Dispersant additive D1⁴ | | - | - | - | 0.17 | 0.17 | 0.17 |
| Flow improver additive | SBS⁵ | - | - | 4 | - | - | - |
| | FM-1⁶ | - | - | - | 0.03 | 0.03 | 0.03 |
| **Process parameters** | | | | | | | |
| Thermal degradation | Temperature, °C | 195 | 195 | 185 | 220 | 220 | 220 |
| | Duration, min | 45 | 60 | 150 | 90 | 90 | 90 |
| Mechano-chemical dispergation | Temperature, °C | - | - | 185 | 170 | 170 | 170 |
| | Duration, min | - | - | 10+10⁷ | 20+10⁸ | 20+10⁹ | 20+10¹⁰ |
| **Properties** | | | | | | | |
| Softening pont, °C | | 60 | 56 | 52 | 45 | 54 | 63 |
| Penetration at 25°C, 0.1 mm | | 78 | 73 | 120 | 125 | 81 | 54 |
| Fraass breaking point, °C | | -20 | -21 | -20 | -25 | -28 | -25 |
| Ductility at 25°C, cm | | 25 | 19 | 92 | 90 | 55 | 31 |
| Elastic recovery at 25°C, % | | 69 | 71 | 90 | 73 | 70 | 78 |
| Viscosity at 135 °C, mPas | | 70600 | 7780 | 560 | 1110 | 2290 | 2860 |
| Viscosity at 180 °C, mPas | | 26200 | 2300 | 130 | 240 | 390 | 550 |
| Storage stability, soft. point. of upper part, °C | | 57 | 63 | 58 | 46 | 52 | 62 |
| Storage stability, soft. point. of lower part, °C | | 60 | 55 | 53 | 48 | 54 | 63 |
| ΔT, °C | | 3 | 8 | 5 | 2 | 2 | 1 |
| RTFOT, change of mass, % | | -0.08 | -0.12 | -0.23 | -0.16 | -0.21 | -0.25 |
| RTFOT, change of penetration, % | | 76 | 73 | 70.3 | 92.5 | 96.8 | 94.7 |
| RTFOT, increase of softening point, °C | | 6 | 5 | 1 | 1 | 2 | 1 |

| | | | | | | | |
|---|---|---|---|---|---|---|---|
| Notation: ¹ Properties of B50/70 asphalt: softening point: 48°C, penetration at 25°C: 51x0,1 mm, Fraass breaking-point: -12°C, ductility at 25°C: >100cm, dynamic viscosity at 135°C: 570 mPas, dynamic viscosity at 180°C: 90 mPas ² Properties of B160/220 asphalt: softening point: 40°C, penetration at 25°C: 190x0,1 mm, Fraass breaking-point: -15°C, ductility at 25°C: >100cm, dynamic viscosity at 135°C: 190 mPas, dynamic viscosity at 180°C: 40 mPas. ³ Crumb rubber (0.1-1mm), produced with ultra high pressure waterjet technology. ⁴ Active agent: polyalkenyl-succinic-ester-amide, the molar ratio of PO(AR)/PB groups=1. ⁵ Styrene-butadiene-styrene block copolymer (commercially available). ⁶ Active agent: commercially available polyisobutylene with average molecular weight of *M̅*ₙ=800. ⁷ In case of PmB-A-1 after 10 minutes of mechanochemical dispergation the 8w/w% concentration of SBS in this sample was decreased to 4w/w% with addition of B 160/220 asphalt. ⁸⁻⁹⁻¹⁰ In case of CSAR after 20 minutes of mechanochemical dispergation the 30w/w% concentration of G1 in this sample was decreased to 15w/w% and after this it was mixed for a further 10 minutes. | | | | | | | |

The two AR references in Table 1 were produced with the wet process, reference sample PmB-A-1 is an SBS modified binder and the other three samples (CSAR-1,2,3) were prepared according to the present invention. Significant differences were found in flow and cold properties. High viscosities of AR-1 and AR-2 reference samples resulted in difficult handling so they were considered to be unadvantageous.

Table 1 shows that CSAR samples prepared according to the present invention have better flow and elastic properties than AR samples, which was indicated by their lower viscosity, higher ductility, higher elastic recovery, lower Fraas breaking point. Furthermore they are less apt to settle and have higher resistance against aging. CSARs compared to SBS modified asphalt are more stable, more resistant against aging, have better cold properties (lower Fraass breaking point).

Properties of crumb rubber modified asphalts presented in Table 1 were determined by the following standards:

| | |
|---|---|
| Softening pont, °C | MSZ EN 1427 |
| Penetration at 25°C, 0,1mm | MSZ EN 1426 |
| Fraass breaking point, °C | MSZ EN 12593 |
| Ductility at 25°C, cm | MSZ 13161 |
| Elastic recovery at 25°C, % | ÚT 2-3.502 |
| Viscosity at 135 °C, mPas | ÚT 2-3.503 M2 |
| Viscosity at 180 °C, mPas | ÚT 2-3.503 M2 |
| Storage stability (tube test, 180°C, 3 days), °C | ÚT 2-3.502 M1 |

Commercially available crumb rubbers from different origins were used for preparation CSARs and their effects are compared in Table 2.

**Table 2 Comparison of the properties of CSARs prepared according to present invention by using various crumb rubbers**

| **Properties** | | **Examples** | | | |
|---|---|---|---|---|---|
| | | **CSAR-4** | **CSAR-5** | **CSAR-6** | **CSAR-7** |
| **Content, mass%** | | | | | |
| B50/70 virgin asphalt | | 94.8 | 10.4 | 30.0 | 42.0 |
| B 160/220 virgin asphalt | | | 72.4 | 42.4 | 42.4 |
| Crumb rubber | G1¹ (max. 2 mm) | 5 | - | - | - |
| | G2² (max. 3 mm) | - | 15 | 25 | - |
| | G3³ (max. 2 mm) | - | 15 | - | - |
| | G4⁴ (max. 4 mm) | - | - | - | 15 |
| Dispersant: D2⁵ | | 0.17 | 2.17 | 2.57 | 0.57 |
| Flow improver: FM-2⁶ | | 0.03 | 0.03 | 0.03 | 0.03 |
| **Process parameteres** | | | | | |
| Thermal degradation | Temperature, °C | 200 | 255 | 230 | 220 |
| | Duration, min | 420 | 30 | 120 | 90 |
| Mechano-chemical dispergation | Temperature, °C | 160 | 170 | 180 | 190 |
| | Duration, min | 15 | 30 | 230 | 80 |
| **Properties** | | | | | |
| Softening pont, °C | | 53 | 49 | 53 | 54 |
| Penetration at 25°C, 0, 1mm | | 78 | 99 | 103 | 89 |
| Fraass breaking point, °C | | -28 | -18 | -16 | -21 |
| Ductility at 25°C, cm | | 21 | 18 | 11 | 15 |
| Elastic recovery at 25°C, % | | 60 | 61 | 58 | 67 |
| Viscosity at 135 °C, mPas | | 2100 | 950 | 1410 | 2120 |
| Viscosity at 180 °C, mPas | | 420 | 200 | 250 | 320 |
| Storage stability, soft. point. of upper part, °C | | 58 | 47 | 52 | 54 |
| Storage stability, soft. point. of lower part, °C | | 62 | 48 | 53 | 59 |
| ΔT, °C | | 4 | 1 | 1 | 5 |

| | | | | | |
|---|---|---|---|---|---|
| Notation: ¹ Michelin type of crumb rubber, particle size less than 2mm, produced with ultra high waterjet technology. ² Taurus type of crumb rubber, particle size less than 2mm, produced with ultra high waterjet technology. ³ Mixed type of crumb rubber, particle size between 0.6-1 mm, produced with mechanical shear. ⁴ Mixed type of crumb rubber, particle size less than 0.3mm, produced with grinding. ⁵ Active agent: polyalkenyl-bissuccinimide with average molecular weight of *M̅*ₙ=2300 (the molar ratio of PO/PB groups=2,2). ⁶ Active agent: polypropylene degradate with average molecular weight of *M̅*ₙ=2080 | | | | | |

Table 2 proves that CSARs produced according to present invention had appropriate properties and they were indenpendent of the raw rubber crumb samples. All four samples satisfied the stability requirements of modified asphalts. In every case all dispersant and flow improver were applied in a predetermined concentration according to the present invention. No significant settling was found, the worst storage stability was that of (CSAR-5) with a ΔT=5°C, which is the maximum permitted softening point difference.

The other properties also satisfied the requirements of the crumb rubber modified binder standard [ASTM 6114 (2002)].

In Table 3 the effects of various combinations of additives of different functions are summarized.

**Table 3. Comparison of the effects of different additive combinations.**

| **Properties** | | **AR-3 Reference example** | **Examples by using dispersant and vegetable oil derivate and** | | **Examples by using anticorrosion additive synthesized from PE-PP degradate** | | **Examples by using dispersant synthesized from PE-PP degradate** | |
|---|---|---|---|---|---|---|---|---|
| | | | **CSAR-8** | **CSAR-9** | **CSAR-10** | **CSAR-11** | **CSAR-12** | **CSAR-13** |
| Content, mass% | | | | | | | | |
| B160/220 virgin asphalt | | 85 | 83.8 | 88 | 82.8 | 78 | 82.8 | 73 |
| G1 crumb rubber¹ | | 15 | 13 | 10 | 15 | 20 | 15 | 25 |
| Dispersant | D2² | - | 1.17 | - | 0.17 | - | 0.17 | - |
| | D3³ | - | 0.7 | 1.7 | - | - | - | - |
| | D4⁴ | - | - | - | - | - | 1,2 | 1,2 |
| Antioxidant | AO-1⁵ | - | 0.3 | 0.3 | - | - | - | - |
| | AO-2⁶ | - | - | - | - | - | 0,1 | 0,1 |
| Flow improver | FM-3⁷ | - | 1.03 | - | 0.03 | - | 0.03 | - |
| | FM-4⁸ | - | - | - | - | - | 0.7 | 0,7 |
| | FM-5⁹ | - | - | - | 0.7 | 0.7 | - | - |
| Anti corrosion: AC¹⁰ | | - | - | - | 1.3 | 1.3 | - | - |
| **Preparation method** | | | | | | | | |
| Thermal degradation | Temperature. °C | 220 | 230 | 220 | 240 | 220 | 225 | 200 |
| | Duration. min | 90 | 45 | 90 | 60 | 210 | 70 | 300 |
| Mechano-chemical shearing | Temperature. °C | 170 | 170 | 190 | 180 | 170 | 170 | 160 |
| | Duration. min | 20+10 | 20+10 | 20+10 | 20+10 | 20+10 | 20+10 | 20+10 |
| **Properties** | | | | | | | | |
| Softening pont, °C | | 45 | 44 | 44 | 47 | 47 | 47 | 47.5 |
| Penetration at 25°C, 0.1mm | | 140 | 188 | 168 | 156 | 141 | 158 | 157 |
| Breaking point, °C | | -25 | -23 | -24 | -23 | -23 | -21 | -22 |
| Ductility at 25°C, cm | | 65 | 65 | 60 | 39 | 38 | 51 | 40 |
| Elastic recovery at 25°C, % | | 50 | 40 | 30 | 45 | 47 | 59 | 57 |
| Viscosity at 135 °C, mPas | | 2180 | 1257 | 1367 | 1492 | 1720 | 1640 | 1800 |
| Viscosity at 180 °C, mPas | | 397 | 300 | 357 | 395 | 450 | 375 | 357 |
| Storage stability, soft. point. of upper part, °C | | 45 | 42 | 40.5 | 41.5 | 42 | 47 | 45 |
| Storage stability, soft. point. of lower part, °C | | 52 | 45.5 | 46.5 | 49 | 50 | 51 | 49.5 |
| ΔT, °C | | 7 | 3.5 | 6 | 4.5 | 8 | 4 | 4.5 |

| | | | | | | | | |
|---|---|---|---|---|---|---|---|---|
| Notation: ¹ Michelin type of crumb rubber, particle size less than 2mm, produced with ultra high pressure waterjet technology. ² Active agent: polyalkenyl-bissuccinimide with average molecular weight of *M̅*ₙ=2300 (the molar ratio of PO/PB groups=0,2). ³ Active agent: reaction product of diethylene glycol and product of thermally reacted maleic anhydride and vegetable oil with average molecular weight of *M̅*ₙ=1200 (the molar ratio of PO/PB groups=3,0). ⁴ Active agent: reaction product of isopropyl alcohol and product of grafting reaction of maleic anhydride and polyethylene-polystyrene degradate with average molecular weight of *M̅*ₙ=2300 (the molar ratio of PO/PB groups=2,5). ⁵ Active agent: reaction product of vegetable oil functionalized with maleic anhydride and diethanolamine with average molecular weight of *M̅*ₙ=1000. ⁶ Active agent: reaction product of polyethylene-polystyrene degradate functionalized with maleic anhydride and ethanolamine with average molecular weight of *M̅*ₙ=2200. ⁷ Active agent: polyisobutylene with average molecular weight of *M̅*ₙ=2000 (commercially available). ⁸ Active agent: polyethylene-polystyrene degradate with average molecular weight of *M̅*ₙ=2100. ⁹ Active agent: polyethylene degradate with average molecular weight of *M̅*ₙ=2500. ¹⁰ Active agent: reaction product of grafting reaction of maleic anhydride and polyethylene degradate with average molecular weight of *M̅*ₙ=3600. ¹¹ After 20 minutes of mechanochemical dispergation the 40w/w% concentration of G 1 sample was decreased to the given concentration in Table 3 with addition of B 160/220 asphalt and after this it was mixed for a further 10 minutes. | | | | | | | | |

It was determined that the properties of chemically stabilized asphalt rubbers (examples: CSAR 8-13) could be varied in a wide range by the preparation steps of our invention compared to reference AR-3 sample, which was produced by using the same raw materials but with no additives. From the point of view of stability only those samples satisfied the requirements which contained stabilizing additive with dispersant effects as well.

Though the softening points of CSAR examples are within a narrow range (44-48°C) their viscosity at 135°C is much lower in every case than that of AR-3, which indicates an advantageous softening effect of the added additives according to present invention. CSAR 12,13 have higher elastic recovery, which also points to the advantage of the process of our invention. AR-1 and PmB-A-1 in Table 4 were compared to CSAR-2 regarding to Superpave PG 58-22 grade. It was proved that example CSAR-2 has high resistance against oxidative aging. According to the results, which were obtained by dynamic shear rheometer, CSAR has more advantageous properties compared to PmB, though a little worse viscosity, but CSAR satisfies the standard requirements. AR-1 sample has too high viscosity, so without using extender oil it does not satisfy the Superpave standard specification.

**Table 4. Rating of the properties of asphalt rubbers according to Superpave PG 58-22 grade.**

| **Properties** | | **AR-1** **reference** | **PmB** **reference** | **CSAR-2** |
|---|---|---|---|---|
| Content, mass% | | | | |
| B50/70 virgin asphalt | | - | - | 42.0 |
| B160/220 virgin asphalt | | 80 | 96 | 42.4 |
| G1 crumb rubber¹ | | 20 | - | 15 |
| Dispersant additive D2² | | - | - | 0.57 |
| Flow improver additive | SBS³ | - | 4 | - |
| | FM-1⁴ | - | - | 0,03 |
| **Process parameters** | | | | |
| Thermal degradation | Temperature, °C | 195 | 185 | 220 |
| | Duration, min | 45 | 150 | 90 |
| Mechano-chemical dispergation | Temperature, °C | - | 185 | 170 |
| | Duration, min | - | 10+10⁵ | 20+10⁶ |
| **Properties** | | | | |
| Flash point, °C (min. 230) | | >250 | >250 | >250 |
| Viscosity at 135 °C, mPas (max. 3000) | | 70600 | 560 | 2290 |
| Dynamic shear, G*/sinδ, kPa (min. 1) | | 31.2 | 16.4 | 22.2 |
| After RTFOT | | | | |
| Change of mass, (max 1,00 %) | | -0.08 | -0.22 | -0.21 |
| Dynamic shear, G*/sinδ, kPa (min. 2,2) | | 34.9 | 18.8 | 26.4 |
| After PAV | | | | |
| Dynamic shear, G*sinδ, kPa (max. 5000) | | 1010 | 1810 | 1270 |
| Creep stiffness, S, MPa (max. 300) | | 65 | 110 | 62 |
| m-value (min. 0,3) | | 0.57 | 0.55 | 0.60 |

| | | | | |
|---|---|---|---|---|
| Notation: ¹ Michelin type of crumb rubber, particle size less than 2mm, produced with ultra high pressure waterjet technology. ² Active agent: polyalkenyl-bissuccinimide polystyrene with average molecular weight of *M̅*ₙ=2300 (the molar ratio of PO/PB groups=0,5). ³ Linear styrene-butadiene-styrene block copolymer (commercially available). ⁴ Active agent: polyisobutylene with average molecular weight of *M̅*ₙ=2000 (commercially available). ⁵ After 10 minutes of mechanochemical dispergation the 8w/w% concentration of SBS was decreased to 4 w/w% with addition of B160/220 asphalt and after this it was mixed for a further 10 minutes. ⁶ After 20 minutes of mechanochemical dispergation the 30w/w% concentration of G1 was decreased to 15 w/w% with addition of B 160/220 asphalt and after this it was mixed for a further 10 minutes. | | | | |

In summary CSARs produced according to present invention have better properties either then virgin asphalts, or AR produced by the wet process. Compared to synthetic polymer modified asphalts, they have very similar, in some cases even better technical characteristics.

## Claims

1. Chemically stabilized and modified crumb rubber asphalt composition, containing virgin asphalts, crumb rubber, and an additive package consisting of a dispersant and antisettling, a cross-linking additive with olefinic double bonds, a flow modifier and in case of necessity one or more other antioxidant, anticorrosion additives, **characterized in that** the composition is made of 55-95% asphalt, 3-40 w/w% crumb rubber from scrap tyres, and 0.04-5 w/w% multifuncional additive package, which is a mixture of multifunctional Components (0.03-4 w/w%) "A", (0.01-4 w/w%) "B" and if necesarry Component "C" (0-2 w/w%) of complementary effects;
component "A" is a multifunctional ashfree dispersant and antisettling additive with an average molecular weight of *M̅*ₙ= 600-200000, preferably 1000-100000;
- that consists of highly polar compounds with proton acceptor (N, O containing) groups that disperse both carbon black and solid fillers;
- their molecules contain oleophile hydrocarbon groups, which allows the dissolution of asphaltenes, resins, paraffinic hydrocarbons, furthermore contain 30-90% sulphurizable olefinic groups enabling the formation of chemical bonds between hydrocarbon groups of asphalts and crumb rubbers during the revulcanization step;
- the molar ratio of polyolefin (PO) and/or polyaromatic (PAR) type oleophile groups and the polar, preferably basic and/or ester groups (PB) in the additive molecules is between PO(PAR)/PB = 1-3:1-6, typically between 1-2:1-3;
component "B" is a flow modifier, mostly viscosity decreaser and/or cross-linking additive with an average molecular weight of *M̅*ₙ= 500-100000, which consists of paraffins, olefins, or their mixtures and/or copolymers functionalized with other groups such as carboxyl, dicarboxyl etc and if necessary other copolymers, which are usually used for asphalt modification (acrylonitrile-butadiene-styrene "ABS", styrene-butadiene "SBR", styrene-butadiene-styrene block copolymer "SBS");
and if required, component "C", an amine type antioxidant and/or anticorrosion additive, which completes the antioxidant effect of phenyl derivatives of asphalts.

2. Method for the preparation of chemically stabilized asphalt rubber composition according to Claim 1, **characterized by** using B50/70 and/or B160/220 virgin asphalts or other asphalts or their mixtures, and 0.03-4w/w% polyalkenyl- succinic ester-amide type dispersant, which has an average molecular weight of *M̅*ₙ= 500-15000, flow modifier additive at 0.01-4w/w% concentration, which has an average molecular weight of *M̅*ₙ= 500-100000 and if necessary 0-2w/w% amine type of antioxidant and/or anticorrosion additivies; during the process the mixture is heated to 70-230°C, then 3-40w/w% of crumb rubber (0.1-4mm) is added in one or more portions, the blend is heated at 190-270°C for 0.5-8 hours when chemical degradation takes place, then it is cooled down to 160-190°C and high shear mixing is applied for 0.25-4 hours, the blend is diluted with virgin asphalt if required, to get a final rubber concentration between 2-30w/w%, the diluted blend is homogenized for another 0.25-2 hours, and the obtained final product is cooled down before storage.

## Patentansprüche

1. Chemisch stabilisierte und modifizierte Gummigranulat-Asphalt-Zusammensetzung, die reine Asphalte, Gummigranulat und eine Additivmischung enthält, welche aus einem Dispersionsmittel und Antiabsetzmittel, einem vernetzenden Additiv mit Olefin-Doppelbindungen, einem Flussmodifikator und, falls notwendig, einem oder mehreren Antioxidanzien, Antikorrosionszusätzen besteht, **dadurch gekennzeichnet, dass** die Zusammensetzung aus 55-95 % Asphalt, 3-40 Gewichts-% Gummigranulat aus Altreifen und 0,04-5 Gewichts-% multifunktionaler Additivmischung besteht, die eine Mischung der multifunktionalen Komponenten (0,03-4 Gewichts-%) "A", (0,01-4 Gewichts-%) "B" und, falls notwendig, der Komponente "C" (0-2 Gewichts-%) mit komplementären Wirkungen ist;
Komponente "A" ist ein multifunktionales aschefreies Dispersionsmittel und Antiabsetzmittel mit einem durchschnittlichen Molekulargewicht von *M̅ₙ* =600-200000, vorzugsweise 1000-100000;
- die aus hoch polaren Verbindungen mit (N, O enthaltenden) Protonenakzeptorgruppen besteht, welche sowohl Rußschwarz wie auch feste Füllstoffe dispergieren;
- ihre Moleküle enthalten oleophile Kohlenwasserstoffgruppen, die die Auflösung von Asphaltenen, Harzen, paraffinischen Kohlenwasserstoffen ermöglichen; sie enthalten ferner 30-90 % vulkanisierbare Olefingruppen, die die Bildung von chemischen Bindungen zwischen Kohlenwasserstoffgruppen von Asphalten und Gummigranulaten während des Vulkanisierungsschritts ermöglichen;
- das Molverhältnis von Polyolefin- (PO) und/oder oleophilen Gruppen vom polyaromatischen (PAR) Typ, und vorzugsweise basische und/oder Estergruppen (PB) in den Additivmolekülen, PO(PAR)/PB liegt beil-3/1-6, normalerweise bei 1-2/1-3;
Komponente "B" ist ein Flussmodifikator; meistens die Viskosität verringernd und/oder ein Vernetzungsadditiv mit einem durchschnittlichen Molekulargewicht von *M̅ₙ* =500-100000, die aus Paraffinen, Olefinen oder Mischungen derselben und/oder Copolymeren besteht, die mit anderen Gruppen, wie zum Beispiel Carboxyl, Dicarboxyl usw. und, falls notwendig, mit anderen Copolymeren funktionalisiert sind, die normalerweise zur Modifizierung von Asphalt verwendet werden (Acrylnitril-Butadien-Styrol "ABS", Styrol-Butadien "SBR", Styrol-Butadien-Styrol-Blockcopolymer "SBS);
und, falls notwendig, Komponente "C", einem Antioxidans vom Amintyp und/oder Korrosionsschutzmittel, das den Antioxidanzien-Effekt von Phenylderivaten von Asphalten ergänzt.

2. Verfahren zur Herstellung einer chemisch stabilisierten Asphalt-Gummi-Zusammensetzung nach Anspruch 1, **gekennzeichnet durch**
- das Verwenden von reinen Asphalten B50/70 und/oder B160/220 oder anderen Asphalten oder Mischungen derselben, und 0,03-4 Gewichts-% Dispersionsmittel vom Typ Polyalkenyl-Succinester-Amid, das ein durchschnittliches Molekurargewicht von *M̅ₙ* =500-15000 hat,
dem Zusatz von Flussmodifikator mit einer Konzentration von 0,01-4 Gewichts-% und einem durchschnittlichen Molekulargewicht von *M̅ₙ* =500-100000, und, falls notwendig, von 0-2 Gewichts-% Antioxidans vom Amintyp und/oder Korrosionsschutzmittel;
das während des Prozesses:
- die Mischung auf 70-230 °C erwärmt ist;
- dann 3-40 Gewichts-% Gummigranulat (0,1-4 mm) in einer oder mehreren Portionen zugesetzt ist,
- die Mischung für eine Dauer von 0,5-8 Stunden auf 190-270 °C erwärmt ist, wobei ein chemischer Abbau stattfindet,
- dann die Mischung auf 160-190 °C gekühlt ist
- und diese für die Dauer von 0,25-4 Stunden unter hoher Scherspannung gemischt wird,
- die Mischung dann mit reinem Asphalt verdünnt ist, falls erforderlich, um eine Gummi-Endkonzentration von 2-30 Gewichts-% zu erhalten,
- die verdünnte Mischung 0,25-2 Stunden lang homogenisiert ist,
- und dann, vor dem Lagern, das erhaltene Endprodukt abgekühlt ist.

## Revendications

1. Composition de granulés à base de caoutchouc et d'asphalte, chimiquement stabilisée et modifiée, contenant des asphaltes vierges, des granulés de caoutchouc et une combinaison d'additifs consistant en un dispersant et un stabilisateur, un additif de réticulation présentant des doubles liaisons oléfiniques, un agent modificateur de l'écoulement et, en cas de besoin, un ou plusieurs autres antioxydants, additifs anticorrosion, ladite composition étant **caractérisée en ce qu'**elle est constituée de 55 à 95% d'asphalte, 3 à 40% p/p de granulés de caoutchouc provenant de déchets de pneu et 0,04 à 5% p/p d'une combinaison d'additifs multifonctionnels, qui est formée d'un mélange de composants multifonctionnels «A» (0,03 à 4% p/p), «B» (0,01 à 4% p/p) et, si nécessaire, de composant «C» (0 à 2% p/p) à effets complémentaires;
- le composant «A» est un adhésif stabilisateur et dispersant multifonctionnel, dépourvu de cendres, ayant un poids moléculaire moyen *M̅ₙ* compris entre 600 et 200 000, de préférence 1 000 et 100 000;
- qui consiste en composés fortement polaires comportant des groupes accepteurs de protons (contenant N, O) qui dispersent à la fois le noir de carbone et les charges solides;
- leurs molécules contiennent des groupes hydrocarbonés oléophiles, qui permettent la dissolution d'asphaltènes, de résines, d'hydrocarbures paraffiniques, qui en outre contiennent 30 à 90% de groupes oléfiniques sulfurisables permettant la formation de liaisons chimiques entre les groupes hydrocarbonés des asphaltes et les granulés de caoutchouc lors de l'étape de revulcanisation;
- le rapport molaire entre les groupes oléophiles de type poly(oléfine) (PO) et/ou polyaromatique (PAR) et les groupes polaires, de préférence basiques et/ou ester (PB) dans les molécules d'additifd PO(PAR)/PB est compris entre 1-3 / 1-6, typiquement entre 1-2 / 1-3;
le composant «B» est un agent modificateur de l'écoulement, généralement un réducteur de viscosité et/ou un additif de réticulation ayant un poids moléculaire moyen *M̅*ₙ de 500 à 100 000, qui consiste en paraffines, oléfines ou leurs mélanges et/ou copolymères fonctionnalisés avec d'autres groupes tels que carboxyle, dicarboxyle, etc., et, si nécessaire, d'autres copolymères, qui sont habituellement utilisés pour la modification d'asphalte (copolymère séquencé d'acrylonitrile-butadiène-styrène, «ABS», styrène-butadiène, « SBR », styrène-butadiène-styrène, «SBS»);
et, si nécessaire, le composant «C», consistant en un antioxydant de type amine et/ou additif anticorrosion, qui complète l'effet antioxydant de dérivés phénylés d'asphaltes.

2. Procédé de préparation d'une composition d'asphalte-caoutchouc chimiquement stabilisée selon la revendication 1, **caractérisée en ce que** sont employés:
- des asphaltes vierges B50/70 et/ou B160/220 ou d'autres asphaltes ou leurs mélanges et 0,03 à 4% p/p de dispersants de type poly(alcényle)-ester succinique-amide, de poids moléculaire moyen *M̅ₙ* de 500 à 15 000,
- un additif modificateur de l'écoulement à une concentration de 0,01 à 4% p/p, de poids moléculaire moyen *M̅ₙ* de 500 à 100 000
- et, si nécessaire, 0 à 2% p/p d'additifs anticorrosion et/ou antioxydants de type amine;
**en ce que** lors du procédé,
- le mélange est chauffé à 70 à 230 °C,
- on ajoute, en une ou plusieurs portions, 3 à 40% p/p de granulés de caoutchouc (0,1 à 4 mm),
- on chauffe ensuite le mélange à 190 à 270 °C pendant 0,5 à 8 heures, une dégradation chimique se produisant,
- puis on refroidit à 160 à 190 °C
- et on effectue un mélangeage sous cisaillement élevé pendant 0,25 à 4 heures,
- dilue ensuite, si nécessaire, le mélange avec de l'asphalte vierge, pour obtenir une concentration en caoutchouc finale comprise entre 2 et 30% p/p,
- homogénéise le mélange dilué pendant 0,25 à 2 heures supplémentaires,
- et avant stockage refroidit le produit final obtenu.
